# EUROPEAN PATENT SPECIFICATION

(11) **EP 3 045 831 B1**
(45) Date of publication and mention of the grant of the patent: **23.08.2017**
(21) Application number: 15175290.4
(22) Date of filing: 03.07.2015
(51) Int. Cl.: F24F 5/00, F24F 7/06, F24F 12/00, F24F 11/00, F24F 7/013, F24F 13/08, F24F 13/20

(54) **COMPACT VANTILATION SYSTEM**
KOMPAKTES ENTLÜFTUNGSSYSTEM
SYSTÈME DE VENTILATION COMPACT

(30) Priority: 16.01.2015 BG 293615 U
(43) Date of publication of application: 20.07.2016
(73) Proprietor: Stefanov, Angel Yordanov, 2161 Pravets (BG)
(72) Inventor: Stefanov, Angel Yordanov, 2161 Pravets (BG)
(74) Representative: Benatov, Samuil Gabriel

(56) References cited:
- EP-A2- 2 397 787
- WO-A2-2013/041066
- DE-A1- 4 002 560
- DE-A1- 4 430 704
- US-A- 5 179 998

## Description

### Technical field of the invention

The invention relates to a compact ventilation system with reversible ventilation to maintain microclimate in a room.

### Background art

An air passage device is known from utility model BG1382 that comprises a passage tube, at each end of which there is inlet and outlet grilles, and a filter, a valve, a heater, an ionizer, an axial fan and a system with hydrostat are located in the tube from the inlet to the outlet.

A disadvantage of this device is that air is fed only in one direction.

Another air passage device with reversible ventilation and heat exchange is also known; it comprises a tube, at each end of which there is internal and external protective grille. A ceramic heat exchanger with a filter and reversible axial fan are located consecutively in the tube.

Disadvantages of this device are low flow rate and impossibility to ensure equal flow rate in discharging and supercharging mode. DE 4002 560 discloses an air conditioner for a single room with an outside connection. An exhaust air and a fresh air channel pass through a heat exchanger, and in each is a fan. There is also a filter in the fresh air channel.

### Summary of the invention

The task of the invention is to provide a compact ventilation system for building-in, which not only delivers fresh and purified air at room temperature, but also regenerates heat and is maximum quiet and occupies no space in the room.

Other tasks of the invention are easy installation of said compact ventilation system, regulation of the humidity, not allowing formation of mold and mildew, ionization of the air, monitoring the occurrence of carbon monoxide CO and excessive amounts of carbon dioxide.

These tasks are solved by providing a compact ventilation system which is build-in, comprising a tubular body in which a filter, a regenerative heat exchanger and a first fan are arranged consecutively from external opening to internal opening of the body. The compact ventilation system also has a control unit. According to the invention, before the filter in the direction of the external opening of the body there is a second fan, and a heater is located in the regenerative heat exchanger.

Preferably, the body of the compact ventilation system comprises a first tube with a circular cross section, telescopically mounted in a second external tube with a circular cross section with a larger radius than the radius of the first tube, with the possibility of axial movement of the internal and external tube relative to each other in order to adjust the length of the body relative to the wall thickness.

The control unit is located in the area of the internal opening and includes a thermal fuse and thermostat.

Preferably, the compact ventilation system further comprises a system with a hydrostat and/or ionizer and/or a sensor for carbon monoxide and/or a sensor for carbon dioxide, connected to the control unit.

Preferably before the external and the internal opening of the body external and internal protective grilles are mounted, respectively.

In a variant the control unit is positioned in the internal grille.

Preferably the fans are axial fans and are oppositely directed.

The advantages of the invention are: compact design that does not take up space in the room and can easily be installed in walls of varying thickness; regeneration of the heat; significantly lower levels of noise at work; regulation of the humidity, which prevents formation of mold and mildew; ionization, which has an antiseptic action, kills pathogenic microorganisms - bacteria and viruses, preventing infections; prevention of carbon monoxide, and control of the amount of carbon dioxide.

### Brief description of the drawings

The compact ventilation system according to the invention is clarified in more detail by means of a preferred embodiment, given by way of non-limiting example of the invention, with reference to the attached figure, which represents a longitudinal section of an embodiment of the ventilation system.

### Detailed description of preferred embodiment

The compact ventilation system, according to the invention, is intended for building in a wall of the room, at premade opening of a suitable size.

The built-in compact ventilation system comprises a tubular body 2 with two opposite openings 10 and 11 at the ends of the body 2. Moreover, one end of the body 2, according to the invention, is open to the space inside the room and is referred as an internal end, respectively, - internal opening 10 of the body 2, and the other end of the body 2 is open to the space outside the room, and is referred as external end, respectively - external opening 11 of the body 2.

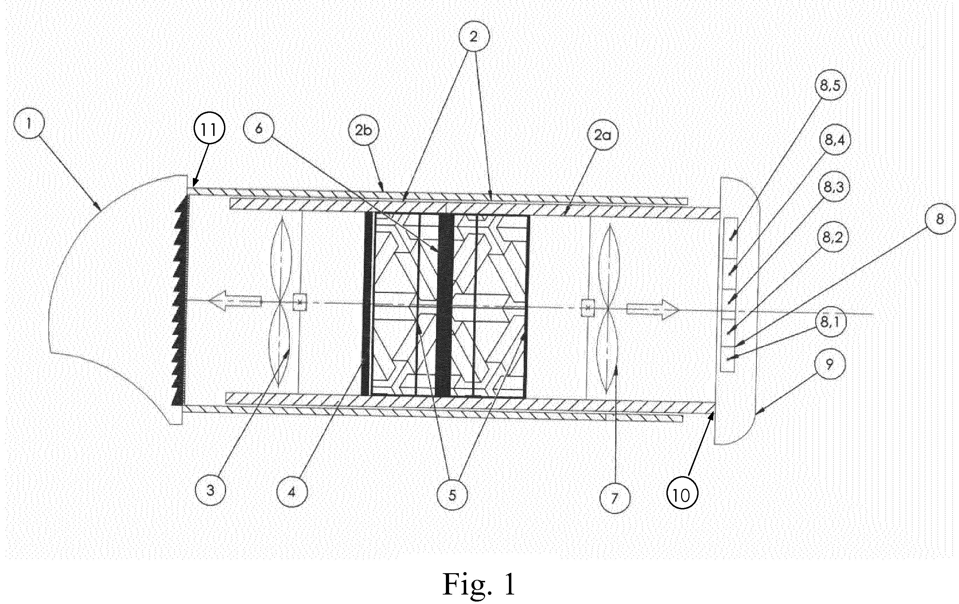

According to Figure 1 in the tubular body 2, from its external opening 11 to its internal opening 10, a filter 4, a regenerative heat exchanger 5 and a first fan 7 are mounted in succession, and between the filter 4 and the external opening 11 there is a second fan 3. The device also has a control unit 8. There is a heater 6, mounted in the regenerative heat exchanger 5. The ventilation device is connected to the electric grid in conventional manner (not shown in the figure), and autonomous power supply from electric battery device is also possible.

In the preferred embodiment of the invention, shown in the figure, the regenerative heat exchanger 5 is a three-volume heat exchanger, and the heater 6 is located in the middle volume of the regenerative heat exchanger 5.

Preferably, the fans are axial fans and are oppositely directed. This means that in operation, respectively, the first fan 7 injects air into the room, and the second fan 3 discharges air from the room.

In the illustrated in Figure 1 embodiment, the body 2 of the ventilation system comprises a first tube 2a with a circular cross section, telescopically mounted in a second external tube 2b with a circular cross section with a larger radius than the radius of the first tube 2a, with possibility of axial movement of the internal and external tube relative to each other to adjust the length of the body 2. The space between the tubes is gas and watertight sealed. This implementation allows easy installation of the device in walls of varying thickness.

Before the external opening 11 and the internal opening 10 of the body 2, an external protective grille 1 and an internal grille 9 are respectively mounted; the latter can be decorative and tailored to the interior of the room.

The control unit 8 is mounted in the area of the internal opening 10, as in the embodiment shown in Figure 1 where the control unit 8 is mounted in the internal grille 9. The control unit 8 can be controlled remotely, by known from the prior art method through wireless device. It is possible the control unit 8 to be mounted outside the body 2 of the ventilation system, wherein it may comprise a control panel built into the wall of the room and connected to the ventilation system.

In the present example, the control unit 8 comprises thermal fuse 8.1 thermostat 8.2, hydrostat system 8.3 and ionizer 8.4. Furthermore, the ventilation system may also comprise other suitable sensors such as sensor for carbon monoxide 8.5 and sensor for carbon dioxide, mounted in the control unit 8, or connected to it. The control unit 8 adjusts the operation of the device so that only air with certain quality and particular characteristics can enter the room.

The hydrostat system 8.3 is designed to monitor the humidity in the room.

Carbon monoxide sensor is suitable for rooms with open flame, such as a fireplace, to prevent the release and accumulation of carbon monoxide in the room.

The carbon dioxide sensor controls released in breathing or by other processes carbon dioxide and keep it in optimal range.

The noise level is reduced several times when the device is operated in mode of discharging air from the room and only the second fan works.

### Ventilation system operation modes

### Reversible ventilation with heat exchange.

The system consistently injects clean atmospheric air from outside to inside through the first fan 7 and discharges contaminated room air outside through the second fan 3. In the cold season of the year, heat regeneration occurs - the process of return of the heat from exiting contaminated but warm room air. The warm air, which exits the room, when passing through the regenerative heat exchanger 5, transfers much of its heat to entering the room clean, but cold air. This significantly reduces the loss of heat in cold winter days.

During the warm season the opposite process takes place - the interior air cooled by an air conditioning working in the room, for example, passing through the regenerative heat exchanger 5, cools it and the regenerative heat exchanger 5 cools the warm and clean air entering into the room.

### Continuous air flow mode.

The second fan 3 is switched off and the first fan 7 is switched on. The system continuously feeds outside air into the room. When the intake air temperature is below a predetermined temperature threshold the heater 6 is switched on. The temperature is controlled by the thermostat 8.2.

### Room air discharging mode.

Fan 7 and heater 6 are switched off, and fan 3 works, discharging the interior air outside.

Reference signs for technical features are included in the claims for the sole purpose of increasing the intelligibility of the claims and accordingly, such reference signs do not have any limiting effect on the interpretation of each element identified by way of example by such reference signs.

## Claims

1. Compact ventilation system for building-in, comprising a tubular body (2) in which a filter (4), a regenerative heat exchanger (5) and a first fan (7) are arranged consecutively from external opening (11) to internal opening (10) of the body (2), and the ventilation system has a control unit (8), **characterized in that** before the filter in the direction of the external opening of the body there is a second fan (3), and **in that** a heater (6) is located in the regenerative heat exchanger (5).

2. Compact ventilation system according to claim 1, **characterized in that** said body (2) comprises a first tube (2a) with a circular cross section, mounted telescopically in a second external tube (2b) with a circular cross section with a larger radius than the radius of the first tube (2a), with possibility for axial movement of the internal and external tube relative to each other to adjust the length of the body (2).

3. Compact ventilation system according to claim 1 or 2, **characterized in that** the control unit (8) is positioned in the area of the internal opening (10) and comprises a thermal fuse (8.1) and a thermostat (8.2).

4. Compact ventilation system according to any of the preceding claims, **characterized in that** it further comprises a system with hydrostat (8.3) and/or a ionizer (8.4) and/or a sensor for carbon monoxide (8.5) and/or a sensor for carbon dioxide, connected to the control unit (8).

5. Compact ventilation system according to any of the preceding claims, **characterized in that** in front of the external opening (11) and in front of the internal opening (10) of the body (2), an external protective grille (1) and an internal grille (9) are respectively mounted.

6. Compact ventilation system according to claim 5, **characterized in that** the control unit (8) is located in the internal grille (9).

7. Compact ventilation system according to any of the preceding claims, **characterized in that** the fans (3, 7) are axial fans and are oppositely directed.

## Patentansprüche

1. Kompaktes Belüftungssystem für Einbau, bestehend aus einem rohrförmigen Körper (2), in dem ein Filter (4), ein regenerativer Wärmetauscher (5) und ein erster Lüfter (7) nacheinander von einer äußeren Öffnung (11) bis zu einer inneren Öffnung (10) des Körpers (2) angeordnet sind und das Lüftungssystem eine Steuereinheit (8) aufweist, **dadurch gekennzeichnet, dass** es vor dem Filter in Richtung der äußeren Öffnung des Körpers ein zweiter Lüfter (3) gibt **und dass** sich ein Heizer (6) im regenerativen Wärmetauscher (5) befindet.

2. Kompaktes Belüftungssystem nach Anspruch 1, **dadurch gekennzeichnet, dass** dieser Körper (2) ein erstes Rohr (2a) mit kreisförmigem Querschnitt aufweist, das teleskopartig in einem zweiten Außenrohr (2b) mit einem kreisförmigen Querschnitt mit größerem Radius als der Radius des ersten Rohres (2a) montiert ist, mit der Möglichkeit einer axialen Bewegung des Innen- und Außenrohres relativ zueinander, um die Länge des Körpers (2) einzustellen.

3. Kompaktes Belüftungssystem nach Anspruch 1 oder 2, **dadurch gekennzeichnet, dass** die Steuereinheit (8) im Bereich der inneren Öffnung (10) angeordnet ist und eine Thermosicherung (8.1) und einen Thermostat (8.2) umfasst.

4. Kompaktes Belüftungssystem nach einem der vorhergehenden Ansprüche, **dadurch gekennzeichnet, dass** es ferner ein System mit Hydrostat (8.3) und/oder einen Ionisator (8.4) und/oder einen Sensor für Kohlenmonoxid (8.5) und/oder einen Sensor für Kohlendioxid umfasst, der mit der Steuereinheit (8) verbunden ist.

5. Kompaktes Belüftungssystem nach einem der vorhergehenden Ansprüche, **dadurch gekennzeichnet, dass** vor der äußeren Öffnung (11) und vor der inneren Öffnung (10) des Körpers (2) ein äußeres Schutzgitter (1) und ein inneres Gitter (9) jeweils montiert sind.

6. Kompaktes Lüftungssystem nach Anspruch 5, **dadurch gekennzeichnet, dass** sich die Steuereinheit (8) im inneren Gitter (9) befindet.

7. Kompaktes Belüftungssystem nach einem der vorhergehenden Ansprüche, **dadurch gekennzeichnet, dass** die Lüfter (3, 7) Axiallüfter sind und entgegengesetzt gerichtet sind.

## Revendications

1. Système de ventilation compact pour son intégration, comprenant un corps tubulaire (2) dans lequel un filtre (4), un échangeur de chaleur régénérant (5) et un premier ventilateur (7) sont disposés successivement depuis une ouverture extérieure (11) vers une ouverture intérieure (10) du corps (2), et dans lequel le système de ventilation comprend une unité de contrôle (8), **caractérisé en ce qu'**en aval du filtre en direction de l'ouverture extérieure (11) du corps (2) il y a un second ventilateur (3), **et en ce qu'**un radiateur (6) est placé dans l'échangeur de chaleur régénérant (5).

2. Système de ventilation compact selon la revendication 1, **caractérisé en ce que** ledit corps (2) comprend un premier tube (2a) avec une section transverse circulaire qui est monté télescopique dans un deuxième tube externe (2b) avec une section transverse circulaire d'un rayon plus large que le rayon du premier tube (2a), avec la possibilité d'un mouvement axial relatif entre le tube interne (2a) et le tube externe (2b) pour ajuster la longueur du corps (2).

3. Système de ventilation compact selon l'une quelconque des revendications 1 et 2, **caractérisé en ce que** l'unité de contrôle (8) est positionnée dans la zone de l'ouverture intérieure (10) et comprend un fusible thermique (8.1) et un thermostat (8.2).

4. Système de ventilation compact selon l'une quelconque des revendications précédentes, **caractérisé en ce qu'**il comprend en outre un système avec un système hydrostatique (8.3) et/ou un ioniseur (8.4) et/ou un capteur de monoxyde de carbone (8.5) et/ou un capteur de dioxyde de carbone, connectés à l'unité de contrôle (8).

5. Système de ventilation compact selon l'une quelconque des revendications précédentes, **caractérisé en ce qu'**en face de l'ouverture extérieure (11) et en face de l'ouverture intérieure (10) du corps (2), sont montées respectivement une grille de protection externe (1) et une grille interne (9).

6. Système de ventilation compact selon la revendication 5, **caractérisé en ce que** l'unité de contrôle (8) est placée dans la grille interne (9).

7. Système de ventilation compact selon l'une quelconque des revendications précédentes, **caractérisé en ce que** les ventilateurs (3,7) sont des ventilateurs axiaux et sont dirigés en opposition.
